# EUROPEAN PATENT APPLICATION

(11) **EP 0 764 864 A1**
(43) Date of publication of application: **26.03.1997**
(21) Application number: 96904287.8
(22) Date of filing: 28.02.1996
(51) Int. Cl.: G02B 6/44

(54) **WATER-BARRIER MATERIAL FOR CABLES**

(30) Priority: 06.03.1995 JP 74475/95
(71) Applicant: TOKAI RUBBER INDUSTRIES, LTD., Komaki-shi Aichi 485 (JP); SUMITOMO ELECTRIC INDUSTRIES, LTD., Osaka-shi, Osaka 541 (JP)
(72) Inventor: SAKURABA, Yukio, Tokai Rubber Industries, Ltd., Komaki-shi, Aichi 485 (JP); NIIYAMA, Shinsuke, Yokohama Works of Sumitomo, Sakae-ku, Yokohama-shi, Kanagawa 244 (JP)
(74) Representative: Bannerman, David Gardner
(86) International application number: JP9600482
(87) International publication number: WO9627813

(57) **Abstract**

To provide a water impervious material for cables (water impervious tape) that has the excellent T-shaped and L-shaped waterproof performance and the excellent performance for winding to optical fiber cables, and further the small amount of entrance into the slot.

A water absorbing composition layer is held on a surface of a sheet substrate, and a cover cloth is pressed on the water absorbing composition layer by means of thermal pressure, and water absorbing polymer particles contained in the water absorbing composition layer are held on the sheet substrate through synthetic rubber or thermoplastic elastomer-synthetic resin within a range of modulus from 10 to 45 kg/cm², further a rigidity value as the water impervious material is equal to 1.2 gfcm²/cm in a longitudinal direction and greater than or equal to 0.6 gfcm²/cm in a lateral direction.

## Description

### TECHNICAL FIELD

The present invention relates to a water impervious material for preventing effectively water from intruding into some kinds of cables such as optical fiber cables.

### BACKGROUND ART

In recent years, most of troubles in communication cables, particularly, in optical fiber cables are caused by intrusion of water into the cables, which results in such problems that intrusion of water degrades the strength of the optical fibers, or intruding water is frozen to urge the optical fibers and deteriorate optical transmission characteristics.

In view of the above, such kinds of water impervious materials are produced that have characteristics capable of preventing water from intruding into optical fiber cables or shortening the intrusion distance even if water intrudes therein (generally referred to as a water impervious tape, water stopping tape, water absorbing tape or the like). For example, in Japanese Patent Laid-Open No.Hei 3-224729 (1991), a water impervious tape of a three-layered structure in which a swelling type water absorbing resin layer formed by attaching a water absorbing-swelling material by means of a binder is formed on the surface of a sheet substrate and a non-woven fabric cover cloth is appended onto the water absorbing resin layer by means of a high pressure calender, is disclosed.

According to this publication, the waterproof performance is improved by adjusting the gaps between fibers of the cover cloth, as well as, it is avoided that a water absorbing-swelling material is detached unexpectedly caused by the existence of the cover cloth and the stickiness caused by the humidity upon winding onto the optical fiber cables, or the like.

Also, in Japanese Patent Laid-Open No. Hei 4-357623 (1992), such water impervious tape is disclosed that has the water absorbing resin layer having water absorbing resin and resin binder as indispensable compositions on a surface of a sheet substrate, on which the non-woven fabric cover sheet made of synthetic resin is appended and dried in a state that solvent is soaking with the water absorbing resin layer, or that has a structure appended by using a thermal roll. Referring to this publication, it is also to prevent the water absorbing resin from absorbing and swelling unexpectedly by means of the cover sheet, and thereby the waterproof performance is maintained.

Further, also in Japanese Patent Laid-Open No.Hei 5-92525 (1993), such water impervious tape is disclosed that a coating layer containing high-water absorbing polymer particles is held on the holder (the sheet substrate), and then a cover cloth such as a non-woven fabric, woven fabric or knitting product is appended on the surface on the coating layer by being pressed by a high-pressure calender press or the like. Referring to this publication, it is to maintain the waterproof performance and to satisfy the stickiness performance upon operating by adjusting the amount of the pressure loss of gaps between fibers of the cover cloth. Or additionally, although it is not illustrated in these publications or the like, such method is adopted that adhesive is used for appending a cover cloth and then the cover cloth is appended on a surface of a water absorbing composition layer on a sheet substrate through the adhesive.

And, when the water impervious tape of a three-layered structure described above is applied to the optical fiber cable, the optical fiber core tape is fixed in the slot formed on the surface of the slot rod, and then the water impervious tape such as mentioned above is wound around the circumference of the slot rod in a state that the water absorbing composition layer side or the cover cloth side should be inside with pressing, after that the outer cover of the cable such as sheath material made from polyethylene is covered at the outer circumference thereof.

And, if cracks is formed on the outer cover of the cable and then water intrudes into it, the water absorbing polymer particles contained in the water absorbing composition layer of the water impervious tape absorb water and by which they swell rapidly, and then they are disintegrated in the slot and spread. According to this, intrusion of water is stopped for a long time.

However, referring to such materials made by the prior art, almost all of them are manufactured by using the press-adhering method by a high-pressure calender or the adhesive-coating method, therefore the surface of the cover cloth as well as the water absorbing polymer contained in the water absorbing tape comes to have adhesion (stickiness) so as to be resulted in such problems that the winding operation for winding a water impervious tape on the optical fiber cables is obstructed, or a guide rail and a guide roll are soiled or the like. And if the adhesion and the water absorbing composition on the surface of the tape are adhered to the guide rail or the guide roll upon winding a tape, it results in such problems that maintenance for the cable manufacturing equipment is trouble to remove adherent-things or to clean it or the like.

Additionally, in the case of such as the water impervious material (water impervious tape) of a structure of the prior art, if it is wound on a slot rod and then the outer cover of the cable such as polyethylene sheath material mentioned above is coated thereon, the water impervious tape is bound tight caused by the shrinking power of itself, and as a result, such phenomenon is generated that the water impervious tape enters into the slot in the slot rod. Then, in the case that it is covered by using the sheath material which is the outer cover of the cable, it is undesirable since an outer appearance of the entered section is as a hollow. Also, in the case that the winding-tension power for the water impervious material (water impervious tape) is low, the water impervious material (water impervious tape) shrinks, therefore it is also undesirable from the viewpoint of the outer appearance for the cable, either.

The present invention has been accomplished in order to solve the foregoing problems and the object thereof is not only to obtain the excellent waterproof performance for T-shaped and L-shaped but also to improve the winding operation onto optical fiber cables, further to prevent the water impervious material from entering into the slot by estimating the appropriate modulus for the organic binder contained in the water absorbing composition layer under the low-tensile condition and by raising the rigidity as the water impervious material in longitudinal and lateral directions, when the water impervious material (water impervious tape) of a three-layered structure should be provided that is obtained by forming the water absorbing composition layer on the sheet substrate on which the cover cloth is further covered.

### DISCLOSURE OF THE INVENTION

In order to achieve the foregoing object, an aspect of a water impervious material for cables according to the present invention resides in that a water absorbing composition layer is formed on the surface of a sheet substrate and a cover cloth is pressed on the water absorbing composition layer by means of the thermal pressure, wherein the water absorbing composition layer is born on the sheet substrate through an organic binder of which a binder modulus of water absorbing polymer particles is within a range from 10 to 45 kg/cm², and also a rigidity value of the water impervious material is greater than or equal to 1.2 gfcm²/cm in a longitudinal direction and greater than or equal to 0.6 gfcm²/cm in a lateral direction.

As the sheet substrate, there can be mentioned, for example, a non-woven fabric, woven fabric or knitting product, of polyester fibers, polyamide fibers, polypropylene fibers, polyethylene fibers, polyacryl fibers, rayon or vinylon. Among the synthetic fibers described above, optional two types of synthetic fibers may be combined. A range from 1 to 10 denier is appropriate for a filament fineness of a non-woven fabric, and a range from 10 to 70 g/m² is appropriate for the weight per unit area.

In the case that polyester type material is applied for the sheet substrate, the weight per unit area is desirable within a range from 40 to 90 g/m². In the case less than or equal to 40 g/m², it is feared that the rigidity value, particularly in a lateral direction, is not obtained enough, on the contrary, in the case greater than or equal to 90 g/m², the economical waste is large.

Further, in the water absorbing composition layer, additives such as water absorbing polymer particles, organic binder, as well as surface active agent, oxidative degradation inhibitor and inorganic filler are blended. As the water absorbing polymer particles, there can be mentioned, for example, a crosslinking product of polyacrylic acid salt, neutralization product of starch - acrylic acid graft polymer, modification product of crosslinked polyvinyl alcohol, crosslinked isobutylene - maleic acid anhydride copolymer, crosslinking product of polyethylene oxide and acrylamide - acryl acid crosslinked polymer.

It is necessary for the water absorbing polymer particles that they are disintegrated upon contact with water and detached from the sheet substrate, but there are no particular restrictions for the shape and diameter of the particles, and the shape of the particles may be of a true spheric shape or a deformed shape. Further, the particle diameter is preferably within a range of such a size (45 to 425 µ m) as not retarding the water absorbing swelling rate and not retarding detachment from the sheet substrate. It is also desirable to contain particles with a diameter of 45 µ m or below to some extent (5 wt% or more) in order not to deteriorate the waterproof performance of minute gaps such as gaps between the slots in an optical fiber cable. The water absorbing polymer particles may be used alone or as a combination of two or more of them.

The organic binder mainly includes rubber type materials and thermoplastic elastomer-synthetic resin type materials. As the rubber type material, there can be mentioned, for example, styrene butadiene rubber, butyl rubber, butadiene rubber, isoprene rubber, ethylene - propylene rubber, chlorosulfonated polyethylene rubber, silicone rubber, chloroprene rubber, polyurethane rubber, acrylic rubber, chlorinated butyl rubber and epichlorhydrine rubbers or the like.

As the thermoplastic elastomer-synthetic resin type material, there can be mentioned, ethylene - vinyl acetate copolymer, ethylene - propylene copolymer, acrylonitrile - butadiene copolymer, styrene - butadiene copolymer, polyester resin, polyamide resin, urethane resin or like other thermoplastic elastomer type material. Also for the organic binder, the rubber materials or the synthetic resin materials mentioned above may be used alone or as a combination of two or more of them, or they may be presented together by random polymerization of them.

In such a case that is mentioned above, if the organic binder is formed by blending styrene - butadiene styrene type thermoplastic elastomer with butyl rubber as the principle ingredients, it is desirable that 100 to 20 parts of butyl rubber is blended with 0 to 80 parts of styrene - butadiene - styrene type thermoplastic elastomer. According to this, a binder modulus can be limited to a range from 10 to 45 kg/cm², and as a result, the waterproof performance for the T-shaped and L-shaped is excellent, and the adhesion performance to a cover cloth is also excellent.

And a cover cloth is appended on this water absorbing composition layer by means of a laminate method, as the cover cloth material, a non-woven fabric, woven fabric or knitting product or the like are used. The cover cloth serves to prevent blocking between each of water impervious tapes when the tapes are left under a high humidity circumstance such as during rainy season and absorb moisture remarkably, or prevent a trouble, for example, contamination of guide rolls during winding to a fiber cable, and it is necessary to have an appropriate gap so as not to hinder the waterproof performance and to withstand tension upon appending fabrication.

Accordingly, as the materials for the cover cloth, a non-woven fabric sheet made of synthetic fibers is optimum and, in view of the material, polypropylene fibers, polyethylene fibers, nylon, polyester fibers, polyacryl fibers, or the like can be used and produced by a span bonding or melt blowing method.

Particularly, as the cover cloth materials, polyolefin type fiber materials such as polypropylene (PP) and polyethylene (PE), etc., polyethylene terephthalate (PET) type fiber material, or the sheath-core structure in which the core is polyethylene terephthalate type fibers and the outer cover is polyolefin type fiber material are preferable. These materials have fine adhesion power for a laminate, and it is confirmed that the materials does not peel even if the cover cloth is humidified upon winding operation onto optical fiber cables under high humidity circumstance.

As the method to laminate the cover cloth is that the water absorbing composition is applied to the sheet substrate and then it is dried at first, on which the cover cloth (for example, the polypropylene) is piled up, further the releasing polyester films are piled up on the upper and lower surfaces, and pressed at a predetermined temperature, and after cooling if the releasing films are peeled off, a water impervious tape provided with the cover cloth can be produced.

As described above, in the present invention, water impervious performance (T-shaped and L-shaped) and adhesion performance to cover cloth are improved by adjusting the modulus of organic binder contained in above mentioned water absorbing composition, further the to prevent the water impervious material from entering into the slot by improving the rigidity performance as water impervious material, however in the beginning if the binder modulus is particularly greater than 10 kg/cm², the water impervious performance for T-shaped is not deteriorated and if it is greater than 60 kg/cm², the water impervious performance for L-shaped is deteriorated.

Additionally, in consideration of adhesion performance of cover cloth, if binder modulus is greater than 45 kg/cm², the adhesion performance for cover cloth is deteriorated, therefore the binder modulus is defined as within a range from 10 to 45 kg/cm² to satisfy both waterproof performance (T-shaped and L-shaped) and adhesion performance for cover cloth. However, a range from 15 to 40 kg/cm² is preferable in order to stabilize the adhesion performance for cover cloth much more, further if the most preferable numerical range for industry is indicated, the most stable waterproof performance and adhesion performance for cover cloth is obtained within a range from 20 to 35 kg/cm².

On the other hand, in the case that the water impervious material does not satisfy either a rigidity of a longitudinal direction or a rigidity of a lateral direction, it comes to be easier that water impervious material enters into the slot of optical fiber cable and the tapes are shrunk, in this case if a rigidity value of a longitudinal direction is greater than 1.5 gfcm²/cm, the entrance of the water impervious material into the slot and the tape shrinkage are avoided, on the other hand, if the rigidity value of lateral direction is also greater than 0.6 gfcm²/cm, the same thing is to be mentioned.

And various kinds of conditioning can be performed in order to improve the rigidity characteristic, for example, in the case of that the sheet substrate is non-woven fabric, the weight per unit area of the non-woven fabric is increased. As the weight per unit area, if it is defined as greater than 40 g/m², the probability to avoid the entrance of the water impervious tape into the slot is pretty high. Also, appending the cover cloth to the water absorbing composition layer and appending the reinforcing tape to the sheet substrate are effective to raise the rigidity value. However, it does not always satisfy the rigidity value only by appending the cover cloth simply, therefore the weight per unit area of sheet substrate, the content of water absorbing composition, the material of cover cloth, and its weight per unit area or the like are contributed as synergistic effects.

Still, in the present invention, it is preferred to blend an appropriate amount of a surface active agent in order to improve the hydrophilic property of the organic binder or blend an oxidative degradation inhibitor for preventing discoloration and curing of the organic binder due to thermal degradation. As the surface active agent, there can be mentioned, for example, an anionic surface active agent, nonionic surface active agent, cationic surface active agent, metal carboxylates, polyhydric alcohol, amino alcohol, linear polyether, saccharides, sugar alcohol, sorbitan fatty acid ester, glycidyl ether of polyhydric alcohol, alkali metal alkyl phosphate, and polyoxyethylene alkyl ether. Further, to blend a small quantity of an inorganic filler such as silica is efficient in order to improve adhesion (stickiness) upon winding operation of optical fiber cables or in order to raise the rigidity value.

### BRIEF DESCRIPTION OF THE DRAWINGS

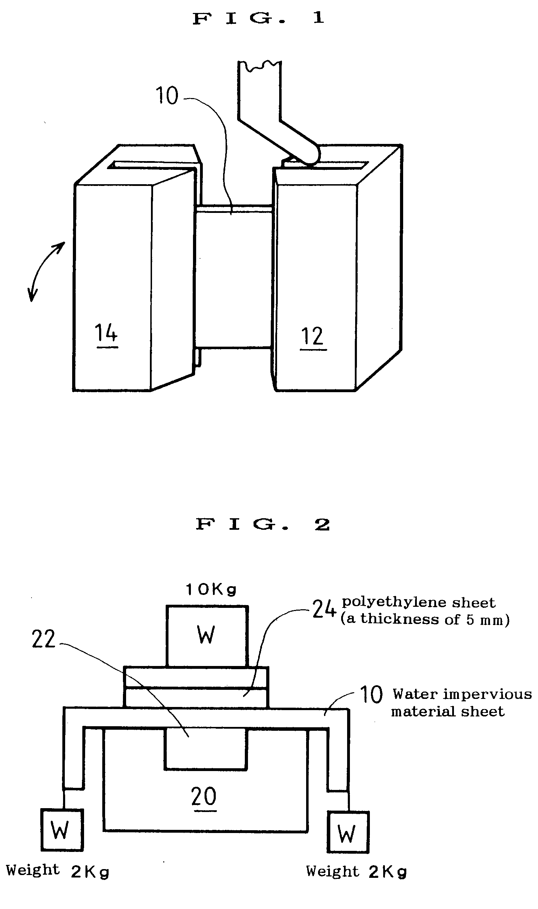

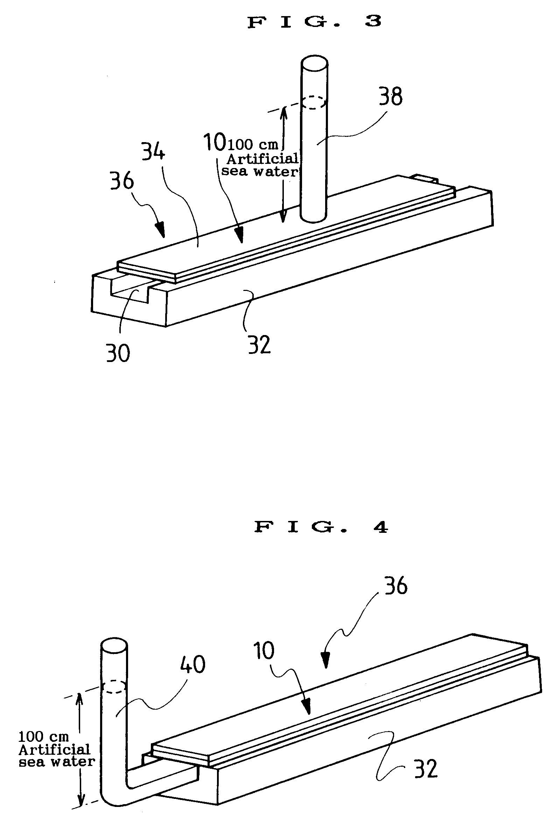

Fig. 1 is a schematic view illustrating a main portion of a device for a rigidity value measuring test (KES method) used for confirming the effect of the present invention; Fig. 2 is a schematic constitutional view of a device for a evaluation test of an amount of a water impervious sheet to enter into a slot used also for confirming the effect of the present invention; Fig. 3 is a perspective view of a T-shaped measuring device for water impervious performance; and Fig. 4 is a perspective view of an L-shaped measuring device for water impervious performance.

### BEST MODE FOR CARRYING OUT THE INVENTION

Preferred embodiments of the present invention are to be explained specifically.

Referring to table 1 and table 2 collectively show the kinds of test specimens and the result of the test for articles of the prior art (comparative articles) and articles of the present invention. Table 1 shows test specimens No.1 to No.8 concerning the articles of the prior art (comparative articles), and table 2 shows test specimens No.9 to No.14 concerning the present invention.

As the sheet substrate for respective test specimens No.1 to No.14 in Table 1 and Table 2, a spun bond non-woven fabric made of polyester ("MARIX 70xxxWTO," trade name of products manufactured by UNITIKA, LTD.) having a polyester single filament fineness of 2 denier is used. Then, the weight per unit area is selected within a range from 30 to 45 g/m² for test specimens No.1 to No.8, and the weight per unit area is selected within a range from 40 to 80 g/m² for test specimens No.9 to No.14.

On the other hand, as the water absorbing composition, each of test specimens No.1 to No.14 has a basic composition that 200 parts of water absorbing resin polymer, which is a crosslinking product of a metal salt of isobutylene - maleic acid copolymer ("KI GEL 201K-F3," trade name of products manufactured by KURARAY CO., LTD.) are blended with 100 parts of organic binder, to which a surface active agent of polyethylene glycol ("PEG 600," trade name of products manufactured by NIPPON OIL AND FATS CO., LTD.) and a phenolic inhibitor for oxidative degradation ("ILLUGANOX 565," trade name of products manufactured by Ciba Geigy Co.) are blended respectively as additives. In the subsequent explanation, all "parts" mean "parts by weight".

Then, styrene - butadiene - styrene (SBS) thermoplastic elastomer ("CALIFLEX TR-1101," trade name of products manufactured by Shell Chemical Co., LTD.) and butyl rubber ("ESSO BUTYL #268," trade name of products manufactured by Esso Co., LTD.) are used as organic binder while varying the blending ratio. As the blending ratio between styrene - butadiene - styrene (SBS) thermoplastic elastomer ("CALIFLEX TR-1101," trade name of products manufactured by Shell Chemical Co., LTD.) and butyl rubber ("ESSO BUTYL #268," trade name of products manufactured by Esso Co., LTD.), the former is varied within a range from 0 to 100 parts and the latter is varied within a range from 100 to 0 under the condition that the total is defined as 100 parts for test specimens No.1 to No.8, and also in the case of test specimens No.9 to No.14 of the present invention, in consideration of the result of the test for the prior art, the test is performed concerning the one which the former is 40 parts and the latter is 60 parts.

Still, the blending amount of a surface active agent is fixed up to 4 parts for each of test specimens No.1 to No.14, and the blending amount of inhibitor for oxidative degradation is 0 parts (not blending) for test specimen No.1, 0.5 parts for test specimens No.2 and No.3 and 1 part for test specimens No.4 to No.14. The deposition amount of water absorbing composition to a sheet substrate is approximate 150 g/m² for each of test specimens No.1 to No.14.

Referring then to the cover cloth, a spun bond non-woven fabric of polypropylene ("SYNTEX PK-102," trade name of products manufactured by Mitsui Petrochemicals Industries, LTD.) with the polypropylene single yarn fineness of 4 denier is appended for all of test specimens No.1 to No.8 and test specimens No.9 to No.12 among the present inventions. And the weight per unit area of the non-woven fabric is defined constant at 12 g/m². Further, a spun bond non-woven fabric of polyethylene terephthalate is appended for test specimen No.13 of the present inventions, and weight per unit area of it is defined constant at 10 g/m². Further the fiber (PE + PET) which has sheath-core structure of which the circumference is made from polyethylene and the center is PET, is appended for test specimen No.14 of the present invention, and the weight per unit area is defined as 12 g/m².

For the water impervious material, an organic binder such as a binder resin is dissolved and dispersed into an organic solvent such as toluene, methyl ethyl ketone or ethyl acetate by using a stirrer and then water absorbing polymer particles are mixed therewith and, further, other additives are mixed as necessary. Then, a water absorbing composition layer is formed by coated on the surface of the sheet substrate using a bar coater or a roll coater. Then, the cover cloth is appended on the surface of the water absorbing composition layer by a lamination method in which the cover cloth is overlaid on the water absorbing composition layer, the upper and lower surfaces are put between releasing polyester films (75 micron thickness) and pressed at a surface pressure of 5 kg/cm² × 3 min by a press adjusted to a temperature of 150°C and then the pressing temperature is cooled to 80°C in the pressurized state. Thus, a water impervious tape provided with the cover cloth can be obtained.

Then, results of various types of tests are to be explained. Measurement of the binder modulus value of the organic binder contained in the absorbing composition layer of the waterproof materials, characteristic of the rigidity (in a longitudinal direction and a lateral direction), performance of entrance to the slot, waterproof performance (T-shaped and L-shaped), and adhesion performance to the cover cloth are mentioned as the test items, which are measured, respectively, by the methods described below. Water used for the tests is artificial water all.

### (1) Binder modulus

The determined samples 2 mm thickness size for tensile stress test by using organic binder used for each of test specimens No.1 to No.14 shown in Table 1 and Table 2 mentioned above is prepared, of which each of modulus is measured by using the standard of JIS K6254 for the low-deformation tensile test.

### (2) Characteristics of Rigidity

For each of test specimens No.1 to No.14, a test specimen No.10 of 20 cm length × 1 cm width or greater is put between a stationary chuck 12 and a movable chuck 14 (disposed at 1 cm distance) and fixed as shown in Fig. 1. Then, after rotating the movable chuck around the stationary chuck as a center in one direction within a range of radius of curvature: K = -2.5 to +2.5 (cm⁻¹), it is further rotationally moved in the opposite direction to provide the specimen with bending deformation and the value for bending rigidity per unit length (unit: gfcm²/cm) is measured (referred to as "KES method"). A sample cut out in a longitudinal direction of the tape and a sample cut out in a lateral direction of the tape for the water impervious material (water impervious tape) are subject to the test for measuring a longitudinal rigidity value and a lateral rigidity value.

### (3) Evaluation Test for the Performance of Entrance

As shown Fig. 2, a water impervious material sheet 10 is placed on a slot 22 of a slot stand 20 shaped like a slot rod, and both ends of the sheet are loaded by load of 2 kg weight. And then a polyethylene sheet 24 (2 mm thickness) supposing an outer cover of a cable is superposed on the water impervious material sheet, and a load of 10 kg weight is loaded thereon, accordingly the evaluation is performed by measuring the amount of the water impervious material sheet 10 to enter into the slot 22. If the amount of the entrance less than 0.2 mm, it comes up to the standard (indicated by " ○ "), if it is greater than or equal to 0.2 mm, it is rejected.

### (4) T-shaped Waterproof Performance

Referring to the T-shaped waterproof performance, this is such a characteristic that intrusion of water into a longitudinal direction of a cable can be stopped when a certain force exerts on an outer cover of the cable to form holes or cracks in the outer cover and water intrudes therethrough. A perspective view of a T-shaped measuring device for water impervious performance is shown in Fig. 3. Referring to the device shown in Fig. 3, at first, 4 leaves of optical fiber core tapes of 0.4 mm thickness and 1 mm width size (not shown) are put in a slot bar 32 which has a slot 30 of 1.6 mm width and 2.0 mm depth size simulating a slot-shaped rod. Then, a water impervious tape 10 is arranged on the slot 30 of the slot bar 32 in a state that its cover cloth side is opposite to the slot 30, further, a sealing vinyl tape 34 is covered at the outer side thereof to prepare a simulated cable 36 of which a structure resembles optical fiber cables.

Then, the simulated cable 36 is placed horizontally with both ends of the slot 30 opening, and the sealing vinyl tape 34 at a center portion of it is peeled off over 1cm, on which a water feed pipe 38 is disposed and a cock (not illustrated) is opened in a state where artificial sea water is filled up to 1 m height to the water feed pipe 38 to permeate water into the water impervious tape 10, and the water running property in the T-shaped direction is evaluated after 24 hours based on the distance that water runs through the slot 30 of the simulated cable 36 till it is stopped. It is judged that waterproof performance is excellent if the running distance of water is short (indicated by " ○ "), but it is not endurable for use (indicated by " X ") if the distance exceeds 1 m (100 cm).

### (5) L-shaped Waterproof Performance

Referring to the L-shaped waterproof performance, this is such a characteristic that intrusion of water into a longitudinal direction of a cable can be stopped in the case that cables is cut by an external force. A perspective view of a L-shaped measuring device for water impervious performance is shown in Fig. 4. Referring to the device shown in Fig. 4, at first, 4 leaves of optical fiber core tapes of 0.4 mm thickness and 1 mm width size are put in a slot bar 32 which has a slot of 1.6 mm width and 2.0 mm depth size simulating a slot-shaped rod. Then, a water impervious tape 10 is arranged on the slot of the slot bar 32 in a state that its cover cloth side is opposite to the slot, further, a sealing vinyl tape is covered at the outer side thereof to prepare a simulated cable 36 of which a structure resembles optical fiber cables.

Then, a water feed pipe 40 is disposed at one end, and a cock (not illustrated) is opened in a state where artificial sea water is filled up to a height of 1 m to this water feed pipe 40, and the water running property in the L-shaped direction is evaluated after 24 hours based on the distance that its sea water runs in the slot till it is stopped. It is judged that L-shaped waterproof performance is excellent if the running distance of water is short, but it is not endurable for use (indicated by " X ") if the distance exceeds 10 m, and it is almost excellent (indicated by " ○ ") if the distance is less than or equal to 8 m.

### (6) Cover cloth adhesion performance

Each of samples of 30 mm width size of test specimens No.1 to No.14 for peel-tensile test mentioned above is fixed to a peel-tensile test divide and then the peel test is performed under the condition that the peeling rate is 50 mm/min and the temperature is 180 °C. If the destructive extent at that time designates greater than 6 kg/cm of peel power, it is judged that it comes to standard (indicated by " ○ "), if it is within a range from 2 to 6 kg/cm, it is judged normal (indicated by " △ ") and if it is less than 2 kg/cm, it is judged that it is rejected (indicated by " X ").

Therefore, as it is obvious referring to Table 1 and Table 2 mentioned above, in the case that the waterproof performance is firstly evaluated, concerning T-shaped waterproof performance, each of test specimens No.1 to No.8 of the prior art and test specimens No.9 to No.14 of the present invention designates excellent value less than or equal to 1 m (100 cm), however, in the case that the binder modulus of the water absorbing composition of water impervious material is equal to 62 kg/cm² (test specimen No.6), the L-shaped waterproof performance shows the value of 10 m, therefore it is not excellent (indicated by " X "). Additionally, in the case that the binder modulus is 50 kg/cm² (test specimen No.5), the L-shaped waterproof performance shows the value of 8 m, and it is judged that it comes up to the standard with difficulty (indicated by " △ ").

Therefore, to satisfy both T-shaped and L-shaped waterproof performance, it is desirable that the value of the binder modulus is less than or equal to approximate 60 kg/cm², further the value less than or equal to 45 kg/cm² is preferable to it. Still, as the lower limit for the binder modulus, since the lower the value of binder modulus, the worse the waterproof performance of T-shaped tends to be, according to data of test specimen No.1, it is desirable that the value of binder modulus is at least greater than or equal to 10 kg/cm².

On the other hand, concerning the adhesive performance for cover cloth, if the binder modulus is greater than or equal to 50 kg/cm² (test specimens No.5 and No.6), it results in bad (indicated by " X "). And concerning the ones of which the binder modulus are 12 kg/cm² near to lower-limit (test specimen No.1) and 44 kg/cm² (test specimen No.4), it is judged that they can be used with difficulty (indicated by " △ "). And, concerning a test specimen No.2 (binder modulus is 23 kg/cm²), and test specimens No.3, 7 and 8 (binder modulus is 31 kg/cm²), although they are obtained in a manner of the prior art, it results in that not only T-shaped and L-shaped waterproof performance but also the adhesive performance of cover cloth is excellent.

According to the test results described above, as the value that improves the waterproof performance (T-shaped and L-shaped) and satisfies the adhesive performance of cover cloth, it is desired within a range approximately from 10 to 45 kg/cm², preferably within a range from 15 to 40 kg/cm². And both the waterproof performance (T-shaped and L-shaped) and the adhesive performance of cover cloth with being the most stable condition are obtained by test specimens No.2, No.3, No.7 and No.8 among the articles of the prior art, and it is proved that the binder modulus is within a range from 20 to 40 kg/cm².

On the other hand, concerning the result of the entrance performance evaluating test, as shown in Table 1, test specimens No.1, No.2, No.3, No.4, No.7 and No.8 are rejected (indicated by " X "). It means that these specimens are not useless since the amount of the water impervious material sheet to enter into the slot is too deep. The test specimens No.5 and No.6 among the articles of the prior art come up to the standard (indicated by " ○ "), in consideration of this entrance performance evaluating test, it is confirmed that if the rigidity value in longitudinal direction (tape length direction) is less than or equal to 1.2 gfcm²/cm, or the rigidity value in lateral direction (tape width direction) is less than or equal to 0.5 gfcm²/cm, they are rejected (indicated by " X ").

According to the comparative data of test specimens from No.9 to No.12 of the present invention, this rigidity value of which a longitudinal rigidity value and a lateral rigidity value tend to increase as the weight per unit area of the non-woven fabric of the sheet substrate increases. Additionally, as the cover cloth material, if PET fibers are used as the cover cloth as a significant difference between polypropylene fibers and polyethylene terephthalate fibers (PET), it is noticeable that the rigidity value of lateral direction is increased.

Still, it is confirmed that if the surface active agent is blended with the water absorbing composition layer of the water impervious material, L-shaped waterproof performance is improved a little, and if the inorganic filler such as silica is blended, the adhesive performance (stickiness) upon winding this water impervious tape on to the optical fiber cables is improved.

In addition, while the tests have been conducted for the various embodiments (test specimens), there is no restriction at all only to the embodiments described above and various improvements and modifications are possible within a range not departing the gist of the present invention. For example, variations for various kinds of compositions or changes of the blending amount are possible as the present invention so long as the binder modulus of the organic binder and the rigidity value of the water impervious material are noticed. And as the means mentioned above, it is considered that the variations for various kinds of sheet substrate, water absorbing compositions or cover cloths etc., or changes of the blending amount of the water absorbing composition, the fiber denier or the weight per unit area for the sheet substrate and the cover cloth.

### INDUSTRIAL APPLICABILITY

The water impervious material for cables according to the present invention is obtained by appending a cover cloth without using a high-pressure calender or adhesive, and improves the T-shaped and L-shaped waterproof performance and the adhesive performance for cover cloth by adjusting the binder modulus of organic binder contained in the water absorbing composition, and also improves the amount of the water impervious material to enter into a slot of a slot rod so as to be small when the material is used as a winding tape to optical fiber cables by raising a rigidity value in longitudinal direction and a rigidity value in lateral direction. Therefore, since adhesive is not adhered to a guide rail and a guide roll used for winding this water impervious material to optical fiber cables, so maintenance for manufacturing equipment for optical fiber cables are decreased, as well as the inferior outside appearance can be avoided, and also a speed for winding to cables quickens, thereby the productivity is improved, etc., by which the economical efficiency is large.

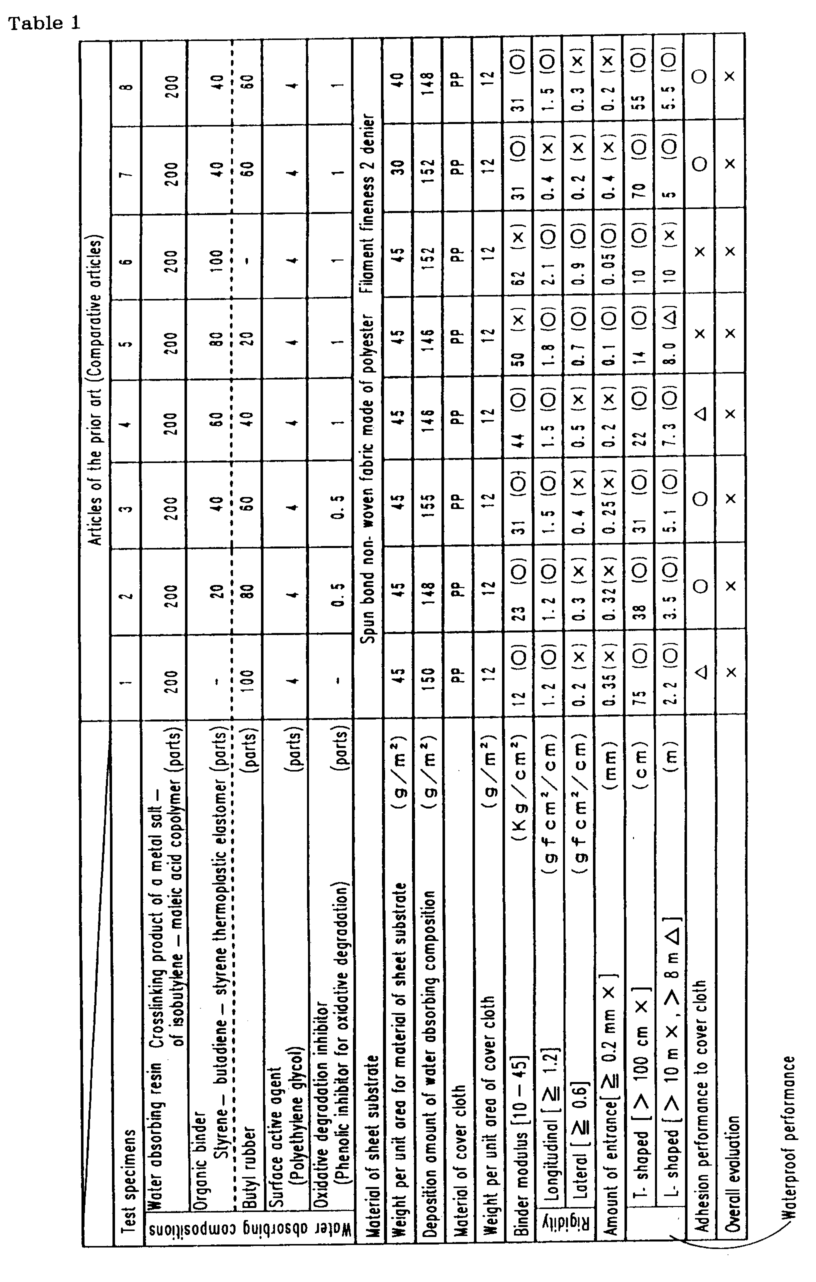

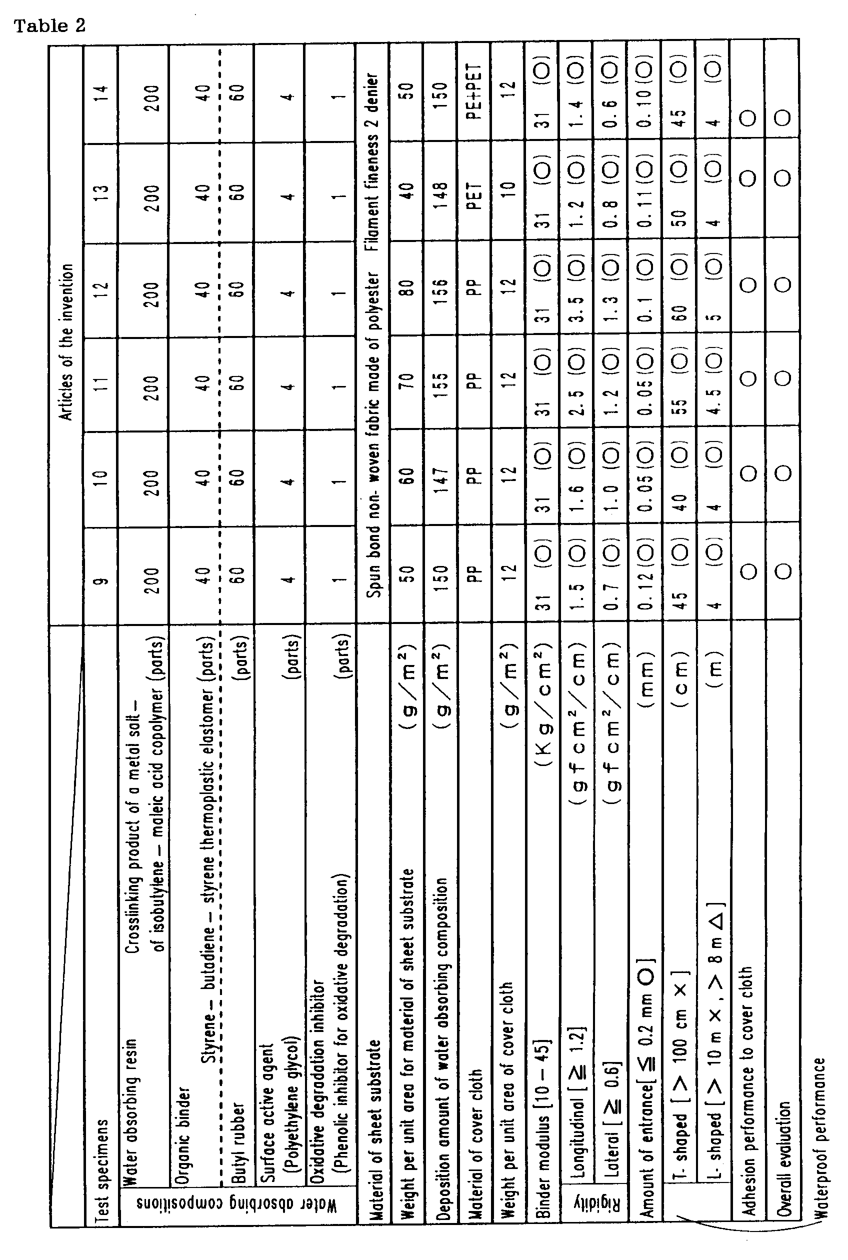

## Claims

1. A water impervious material for cables in which a water absorbing composition layer is formed on the surface of a sheet substrate and a cover cloth is pressed on said water absorbing composition layer by means of the thermal pressure, wherein said water absorbing composition layer is born on said sheet substrate through an organic binder of which a binder modulus of water absorbing polymer particles is within a range from 10 to 45 kg/cm², and also a rigidity value of the water impervious material is greater than or equal to 1.2 gfcm²/cm in a longitudinal direction and greater than or equal to 0.6 gfcm²/cm in a lateral direction.

2. A water impervious material for cables according to claim 1, wherein said sheet substrate is a polyester type fiber material, and the weight per unit area is within a range from 40 to 90 g/m².

3. A water impervious material for cables according to claims 1 or 2, wherein the organic binder contained in said water absorbing composition layer is formed by blending styrene - butadiene - styrene type thermoplastic elastomer with butyl rubber as the principle ingredients, and 100 to 20 parts of butyl rubber is blended with 0 to 80 parts of styrene - butadiene - styrene type thermoplastic elastomer.

4. A water impervious material for cables according to claims from 1 to 3, wherein said cover cloth is consisted of polyolefin type fiber material.

5. A water impervious material for cables according to claims from 1 to 3, wherein said cover cloth is consisted of polyethylene terephthalate type fiber material.

6. A water impervious material for cables according to claims from 1 to 3, wherein said cover cloth is a sheath-core structure in which a core part is consisted of polyethylene terephthalate type fiber material and an outer cover is consisted of polyolefin type fiber material.
